# EUROPÄISCHE PATENTSCHRIFT

(11) **EP 1 597 444 B1**
(45) Veröffentlichungstag und Bekanntmachung des Hinweises auf die Patenterteilung: **17.10.2007**
(21) Anmeldenummer: 04712476.3
(22) Anmeldetag: 19.02.2004
(51) Int. Cl.: E04D 13/14, F16L 5/10

(54) **VERFAHREN UND VORRICHTUNG ZUR ABDICHTUNG VON DURCH WÄRMEDÄMMUNGEN HINDURCHRAGENDEN TEILEN**
METHOD AND DEVICE FOR SEALING PARTS THAT TRAVERSE THERMAL INSULATION
PROCEDE ET DISPOSITIF POUR RENDRE ETANCHE LE PASSAGE DE PIECES TRAVERSANT UN SYTEME D ISOLATION THERMIQUE

(30) Priorität: 20.02.2003 DE 10307434
(43) Veröffentlichungstag der Anmeldung: 23.11.2005
(73) Patentinhaber: Fiedler, Ernst, 72224 Ebhausen (DE)
(72) Erfinder: Weerts, Wilfried, 48465 Schüttorf (DE); Fiedler, Ernst, 72224 Ebhausen (DE)
(74) Vertreter: Herzog, Günter
(86) Internationale Anmeldenummer: PCT/DE2004/000310
(87) Internationale Veröffentlichungsnummer: WO 2004/074596

(56) Entgegenhaltungen:
- DE-U- 7 307 087
- US-A- 1 278 120
- US-A- 4 730 421

## Beschreibung

### Stand der Technik

Die Erfindung geht aus von einem Verfahren und einer Vorrichtung zur Abdichtung von durch Wärmedämmungen hindurchragenden Teilen nach der Gattung des Hauptanspruches, beispielsweise zur dichten Durchführungen von Entlüftungsrohren, Dachentwässerungen, Antennenmasten u.a. durch gedämmte Flachdächer oder auch zur Montage von Teilen auf bzw. an mit Wärmedämmungen versehenen Flächen. Dabei ist es für die Erfindung unerheblich, ob die Teile an dem Bauwerk bereits vorhanden sind und lediglich die Wärmedämmung in ihrer Umgebung erneuert wird oder ob die Teile selbst erneuert werden oder ob sie im Fall eines Neubaus erstmals montiert werden.

Bautechnisch bedingte Durchführungen von Teilen durch Wärmedämmungen stellen hinsichtlich ihrer Dichtigkeit immer dann kritische Bereiche dar, wenn die Wärmedämmung an feuchte Bereiche angrenzt und gegen diese isoliert sein muss. Hierzu gehören sowohl durch wärmegedämmte Flächen hindurchgeführte als auch auf bzw. an diesen montierte Teile, die lediglich die Wärmedämmung durchdringen. Ein Hauptanwendungsgebiet sind natürlich Durchführungen durch wärmegedämmte Flachdächer, sog. Warmdächer, wie Be- und Entlüftungen, Entwässerungen, Antennenmasten u.a. Ein weiteres Anwendungsgebiet sind an Erdreich oder Wasser angrenzende Wände, wie Kellerwände oder Wände von Schwimmbecken.

Stellvertretend für die Vielzahl der technischen Lösungen, mit denen in den beschriebenen Fällen eine dauerhafte Dichtigkeit gewährleistet werden soll, seien hier die Gebrauchsmuster DE 8422894 U1 und DE 9001833 U1 genannt, die ausnahmslos Dachdurchführungen betreffen. Bei der erstgenannten Lösung werden die durch das Flachdach hindurch geführten Teile von außen her mit einer feuchtigkeitsundurchlässigen Spezialmanschette versehen, die mit ihrem horizontalen Bereich auf die Dachbahn ausgeklebt bzw. -geschweißt wird.

Weitaus aufwändiger stellt sich die Dachdurchführungsvorrichtung des zweitgenannten Gebrauchsmusters dar, bei der zum Schutz der Wärmedämmschicht ein zusätzliches Schutzrohr vorgesehen ist, das mit der auf der Dachschale aufgebrachten ersten Isolierlage verschweißt oder verklebt wird. Die Herstellung dieser Dachdurchführungen ist in jedem Fall mit einem erhöhten zeitlichen Aufwand verbunden und erfordert ein bestimmtes handwerkliches Können. Darüber hinaus ist jede Durchführung durch eine Wärmedämmung infolge von Temperaturunterschieden und mechanischen Beanspruchungen gefährdet und daher in ihrer Haltbarkeit begrenzt. Bei Dächern kommen zu diesen Beanspruchungen noch Belastungen aus Witterungseinflüssen hinzu. Die Undichtigkeit einer Durchführung durch eine Wärmedämmung wird meistens erst sehr spät erkannt, da eingedrungenes Wasser zunächst auf der Isolierung und danach auf der diese tragenden Fläche längere Zeit steht, bevor es an tiefer gelegenen Stellen dann durch die Decke hindurch tritt. Das bedeutet, dass die Austrittsstelle in den seltensten Fällen mit der Eintrittsstelle der Feuchtigkeit in die Wärmedämmung identisch ist. Besonders hohe Reparaturkosten entstehen, wenn die Isolierung durchfeuchtet ist. Dann muss sie vollständig erneuert werden, was immer auch mit einer Erneuerung der sie schützenden feuchteundurchlässigen Isolierschicht und daher mit einem hohen finanziellen Aufwand verbunden ist.

Bekannt ist ferner, in ein Flachdach ein mit dem Dach verbindbares Durchgangsteil, bestehend aus einem äußeren harten Topf mit breitem oberen Topfrand und einem Loch im Boden mit innerem Bodenrand, einzusetzen, durch das ein Rohr durchgeführt wird. Der breitere obere Topfrand liegt auf dem Flachdach auf und kann mit diesem verklebt werden. Das Rohr wird von einem innen liegenden, wärmedämmenden Innenteil gehalten (DE 7307087 U). DE 7307087 U offenbart somit alle Merkmale des Oberbegriffs des Anspruchs 8, wobei ein Teil durch eine feste Unterlage hindurchragt. Dies gilt auch für Anspruch 1.

### Die Erfindung und ihre Vorteile

Das erfindungsgemäße Verfahren mit seinen kennzeichnenden Merkmalen des Patentanspruches 1 sowie die erfindungsgemäße Dichtvorrichtung mit ihren kennzeichnenden Merkmalen des Patentanspruches 8 haben demgegenüber den Vorteil, dass sich die Feuchtigkeit im Fall von Undichtigkeiten der Durchführung in einem einfach herzustellenden, feuchteundurchlässigen schalenförmigen Element sammelt, so dass sie nicht in die angrenzende Wärmedämmschicht gelangen kann. Außerdem lässt sich das schalenförmige Element, das im Prinzip ein dichtes Behältnis darstellt, sehr einfach montieren und ermöglicht sehr einfache und damit preisgünstige Technologien, den dichtenden Anschluss zwischen dem bzw. den durch die Wärmedämmung hindurchgeführten Teilen und der dichtenden Isolierung, beispielsweise einer Dachhaut, herzustellen.

Sollte der Anschluss der dichtenden Isolierung an einem aus der Wärmedämmung herausragenden Teil einmal undicht werden, gelangt die Feuchtigkeit zunächst in das schalenförmige Element.

Beim Feststellen der Undichtigkeit braucht dann lediglich die in dem schalenförmigen Element befindliche Wärmedämmung erneuert und die dichtende Isolierung nur an dieser Stelle wieder aufgebracht zu werden, wodurch auch der Reparaturaufwand wesentlich verringert wird. Die Dichtvorrichtung hat somit zwei Funktionen, nämlich Abdichtungen von durch Wärmedämmungen durchgeführten Teilen auf einfache Weise zu ermöglichen und darüber hinaus evt. eintretende Feuchtigkeit zu sammeln.

Besonders vorteilhaft ist die Anwendung der Erfindung bei Dachgullis, bei denen außer dem Undichtwerden durch Feuchtigkeit von außen zusätzlich noch ein durch Verstopfung hervorgerufenes Eindringen von Feuchtigkeit in die Wärmedämmung von innen her sehr häufig vorkommt. Das schalenförmige Element nimmt auch diese Feuchtigkeit auf und schützt so die Wärmedämmung.

In einer vorteilhaften Ausgestaltung der Erfindung wird das schalenförmige Element vor der Montage des bzw. der Teile auf die feste Unterlage aufgebracht. Dazu ist es bereits mit den erforderlichen Durchbrüchen versehen. Die schalenförmigen Elmente können quasi für jeden beliebigen Querschnitt der auf Unterlagen montierten bzw. auch durch diese hindurchgeführten Teile angepasst und auch schon vorgefertigt werden. Wenn der Innenraum der schalenförmigen Elemente bei der Vorfertigung bereits mit einer Wärmedämmschicht versehen ist, kann die Montage vor Ort sehr schnell und ohne großen Aufwand erfolgen. Das schalenförmige Element wird auf die Unterlage, beispielsweise auf die Dampfsperre einer Dachschale, aufgesetzt. Danach wird die innere Wärmedämmung herausgenommen, das Teil in den vorbereiteten Durchbruch eingesetzt, die Ausnehmung für das Teil auch in die Wärmedämmung eingebracht und die Wärmedämmung wieder eingelegt.

Die beiden letztgenannten Schritte können entfallen, wenn in einer weiteren vorteilhaften Ausgestaltung der Erfindung das schalenförmige Element und das bzw. die durch die Wärmedämmung hindurchragenden Teile entweder als ein Stück ausgebildet sind oder vorher miteinander montiert wurden.

Ist das schalenförmige Element nicht schon mit einer Wärmedämmung ausgefüllt, muss diese in einer weiteren vorteilhaften Ausgestaltung der Erfindung nach der Montage des schalenförmigen Elements sowie des bzw. der Teile in den verbleibenden Innenraum nachträglich eingebracht werden.

Nach der Montage des schalenförmigen Elements sowie des bzw. der durch die Wärmedämmung hindurchragenden Teile und der Einbringung der Wärmedämmung in das schalenförmige Element wird die Wärmedämmung von außen an das schalenförmige Element herangelegt. Das Heranlegen der Wärmedämmung von außen kann entfallen, wenn beispielsweise im Fall einer Reparatur die Aussparung in der Wärmedämmung exakt der Größe des schalenförmigen Elements entspricht. Entscheidend ist, unabhängig von der Vorgehensweise, dass nach dem Verlegen aller Teile keine Kältebrücken in der Wärmedämmung entstehen, d. h. dass Zwischenräume zwischen der in dem schalenförmigen Element befindlichen Wärmedämmung und der von außen angrenzenden Wärmedämmung möglichst vermieden werden müssen.

Abschließend erfolgt das Aufbringen der feuchteundurchlässigen Isolierung, im Fall einer Dachdurchführung, der Dachhaut, und die Abdichtung zwischen Dachhaut und dem bzw. den aus der Wärmedämmung herausragenden Teilen mit den an sich bekannten Mitteln und Technologien. Wenn es sich um eine Dachdurchführung beispielsweise eines Entlüftungsrohres handelt, braucht dieses nicht unbedingt gegenüber dem schalenförmigen Element abgedichtet zu werden. Im Fall der Undichtheit der Dachhaut an dieser Stelle würde das Wasser an dem Entlüftungsrohr herablaufen und dadurch sofort auf die Undichtheit aufmerksam machen.

Bei der Reparatur der Wärmedämmung an bereits fest montierten Teilen wird in einer weiteren vorteilhaften Ausgestaltung der Erfindung das durch die Wärmedämmung durchgeführte Teil ringsherum freigelegt und ein mehrteiliges schalenförmiges Element an dieses Teil herangeführt, die Teile des schalenförmigen Elements auf der Unterlage fixiert und wieder dichtend miteinander verbunden. Danach wird, wie oben beschrieben, die Wärmedämmung in das schalenförmige Element eingebracht und von außen an dieses herangeführt und abschließend die feuchteundurchlässige Isolierung aufgebracht.

In einer weiteren vorteilhaften Ausgestaltung der Erfindung braucht die feuchteundurchlässige Isolierung lediglich zwischen dem schalenförmigen Element und den an dieses angrenzenden Bereichen hergestellt zu werden. Dieses sehr zeitsparende Verfahren kann dann Anwendung finden, wenn das schalenförmige Element quasi als Fertigteil, also mit zu montierenden Teilen, Wärmedämmung und feuchteundurchlässiger Isolierung, zur Verfügung steht. Andernfalls muss die feuchteundurchlässige Isolierung bis an das bzw. die durch die Wärmedämmung hindurchragenden Teile dichtend herangeführt werden.

Die äußere Form des schalenförmigen Elementes ist so gestaltet, dass die Wärmedämmung durch Zuschneiden, in der Regel durch einfach auszuführende gerade Schnitte, dieser Form anpassbar ist.

In einer weiteren vorteilhaften Ausgestaltung der Erfindung weist die Bodenfläche des schalenförmigen Elementes mindestens eine Öffnung für mindestens ein Teil auf, das außer durch die Wärmedämmung auch noch durch die Unterlage, beispielsweise eine Dachschale, hindurchgeführt ist. Die Vorfertigung derartiger Durchbrüche entsprechend der durch die Unterlage durchzuführenden Teile ist für eine schnellere Montage günstig.

In einer weiteren vorteilhaften Ausgestaltung der Erfindung weist das schalenförmige Element eine rechteckige Bodenfläche und einen rechteckigen Querschnitt auf.

In einer weiteren Ausgestaltung der Erfindung kann das schalenförmige Element auch eine kreisrunde oder ovale Bodenfläche besitzen.

In einer weiteren Ausgestaltung der Erfindung ist die Querschnittsform nicht auf ein Rechteck festgelegt, sie kann beispielsweise auch trapezförmige sein.

In einer weiteren vorteilhaften Ausgestaltung der Erfindung sind die Seitenwände des schalenförmigen Elementes mit einem nach außen ragenden Rand versehen, um einen gleichmäßigen Übergang der feuchteundurchlässigen Schicht zu gewährleisten.

In einer weiteren vorteilhaften Ausgestaltung der Erfindung ist das schalenförmige Element mehrteilig ausgeführt, so dass es, wie oben bei der Erläuterung des Verfahrens beschrieben, auch bei bereits montierten durch die Wärmedämmung durchgeführten Teilen angewendet werden kann.

In einer weiteren vorteilhaften Ausgestaltung der Erfindung sind das schalenförmige Element und mindestens ein durch die Wärmedämmung durchzuführendes Teil als ein Stück ausgebildet. Dadurch lässt sich der Montageaufwand wesentlich verringern.

Sollte aus bestimmten Gründen die Form des schalenförmigen Elementes keine ebenen Seitenwände aufweisen, so ist es zur Vereinfachung der Montage in einer weiteren vorteilhaften Ausgestaltung der Erfindung möglich, das schalenförmige Element bereits bei seiner Herstellung sowohl innen als auch außen mit der nötigen Wärmedämmung zu versehen, wobei die äußere Wärmedämmschicht dann ebene Mantelflächen aufweist, an die die angrenzende Wärmedämmschicht der restlichen Dachfläche dann auf einfache Weise dicht anschließen kann.

Eine besonders vorteilhafte Ausgestaltung der Erfindung besteht darin, das schalenförmige Element als Fertigteil, also mit zu montierenden Teilen, Wärmedämmung und feuchteundurchlässiger Isolierung, auszuführen.

Weitere Vorteile und vorteilhafte Ausgestaltungen der Erfindung sind der nachfolgenden Beispielsbeschreibung, der Zeichnung und den Ansprüchen entnehmbar.

### Zeichnung

Ein Ausführungsbeispiel der Erfindung ist in der Zeichnung dargestellt und im Folgenden näher beschrieben.

Es zeigen:
- Fig. 1: eine räumliche Darstellung der schalenförmigen Dichtvorrichtung,
- Fig. 2: einen Querschnitt durch eine eingebaute Dichtvorrichtung in ein Warmdach und
- Fig. 3: eine schalenförmige Dichtvorrichtung mit trapezförmigem Querschnitt und äußerer Wämedämmung.

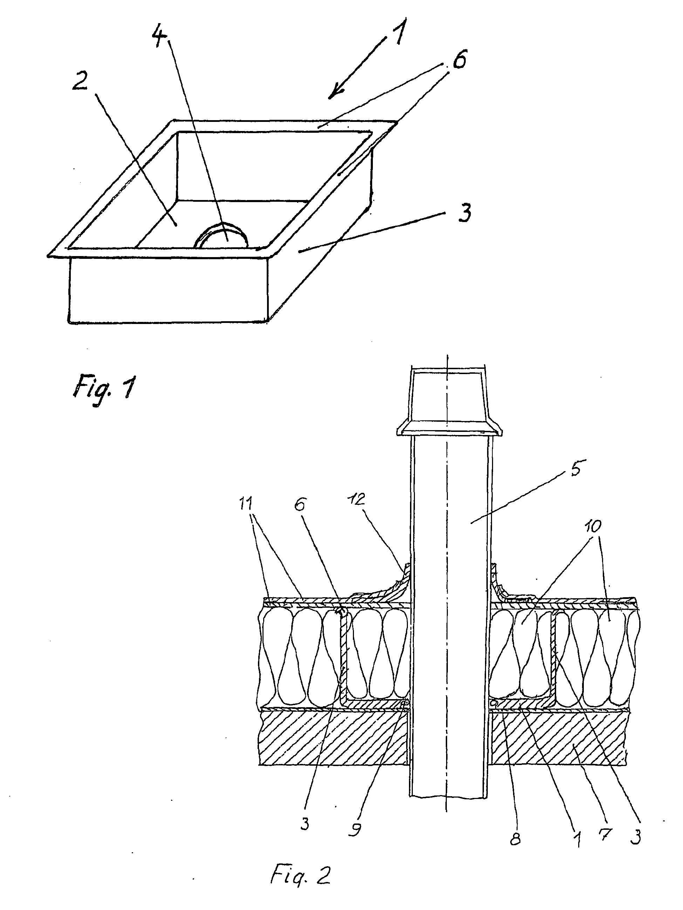

Wie aus Fig. 1 zu erkennen, wurde im vorliegenden Beispiel eine schalenförmige Dichtvorrichtung 1 mit einer quadratischen Bodenfläche 2 und senkrechten Seitenwänden 3 verwendet. In ihrer Bodenfläche 2 ist eine kreisrunde Öffnung 4 für ein Entlüftungsrohr 5 vorgesehen. Für einen gut dichtenden Anschluss der Dachhaut an die Seitenwände 3 der Dichtvorrichtung 1 sind diese zu eine, umlaufenden Rand 6 abgewinkelt.

Fig. 2 zeigt die Dichtvorrichtung 1 im eingebauten Zustand mit dem Entlüftungsrohr 5, das durch eine Dachschale 7 sowie eine auf diese aufgebrachte Dampfsperre 8 hindurchgeführt ist. Zur Abdichtung zwischen Dichtvorrichtung 1 und dem Entlüftungsrohr 5 ist im vorliegenden Beispiel in den Mantel der Öffnung 4 der Bodenfläche 2 eine Nut eingebracht, in der ein Dichtungsring 9 sitzt, der mit seiner Innenfläche an dem Entlüftungsrohr 5 anliegt. Der Dichtungsring 9 kann aber auch entfallen, nämlich dann, wenn evtl. in der Dichtvorrichtung 1 angesammeltes Wasser dadurch bewusst wahrgenommen werden soll, wenn es an dem Entlüftungsrohr 5 herunterläuft. Auf die Dampfsperre 8 ist eine Isolierung 10 aufgebracht. Diese ist sowohl von außen an die Seitenwände 3 der Dichtvorrichtung 1 herangeführt als auch in den Ringraum innerhalb der Dichtvorrichtung 1 eingebracht. Die äußere Dachhaut besteht in bekannter Weise aus einer zweilagigen Dacheindeckung 11, die mittels einer Manschette 12 dichtend an das Entlüftungsrohr 5 herangeführt ist. Eine derartige Abdichtung ist ohne großen Aufwand herstellbar. Sollte sie im Laufe der Zeit undicht werden, wird die eindringende Feuchtigkeit von dem Ringraum der Dichtvorrichtung 1 aufgenommen und dabei nur die darin befindliche Isolierung 10, nicht jedoch die außerhalb der Dichtvorrichtung 1 befindliche Isolierung 10 durchfeuchtet. Bei der Reparatur des Daches braucht demzufolge nur dieser kleine Teil der Isolierung 10 ausgetauscht und die zweilagige Dacheindeckung 11 sowie die Manschette 12 erneuert zu werden.

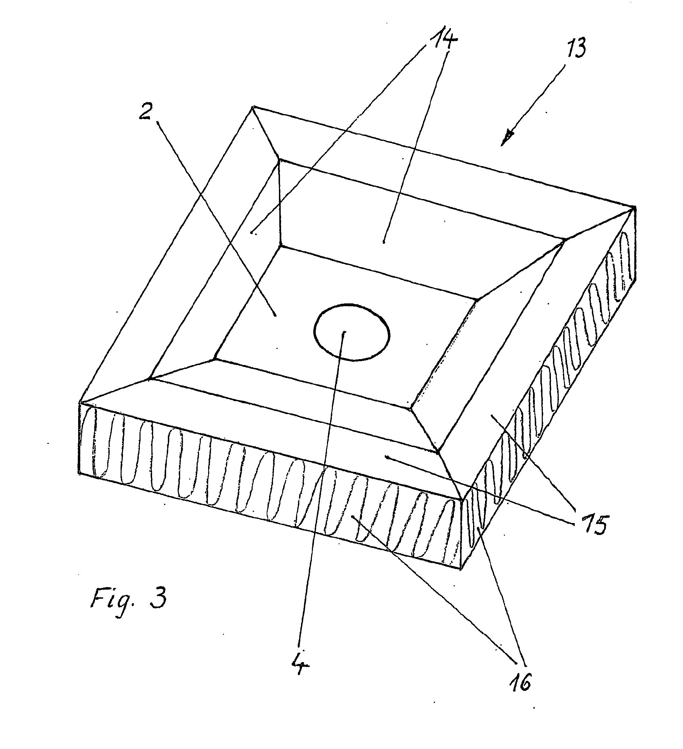

Fig. 3 zeigt eine Dichtvorrichtung 13 mit quadratischer Grundfläche und trapezförmigem Querschnitt. An ihre schrägen Seitenwände 14 schließt sich ein leicht nach innen geneigter Rand 15 an, der quasi einen schrägen Einlauf in die Dichtvorrichtung 13 bildet. Der geneigte Rand 15 kann auch zur besseren Angleichung an die hier nicht gezeigte Dacheindeckung außen in einen waagerechten Verlauf übergehen. Wegen der schrägen Seitenflächen 14 ist die Dichtvorrichtung 13 von außen mit einer Wärmedämmschicht 16 versehen, so dass zum Anschluss an die angrenzende Wärmedämmung ebene Flächen vorhanden sind.

### Bezugszahlenliste

- 1: Dichtvorrichtung
- 2: Bodenfläche
- 3: Seitenwände
- 4: Öffnung
- 5: Entlüftungsrohr
- 6: Rand
- 7: Dachschale
- 8: Dampfsperre
- 9: Dichtungsring
- 10: Isolierung
- 11: Dacheindeckung
- 12: Manschette
- 13: Dichtvorrichtung
- 14: Schräge Seitenwände
- 15: Geneigter Rand
- 16: Wärmedämmschicht

## Patentansprüche

1. Verfahren zur Abdichtung von durch Wärmedämmungen hindurchragenden Teilen (5), die auf einer festen Unterlage (7) befestigt sind bzw. montiert werden oder durch diese Unterlage (7) ebenfalls hindurchragen,
- wobei die Wärmedämmung (10) auf der Unterlage (7) auf- bzw. an einer solchen anliegt und an ihrer freien Oberfläche mit mindestens einer feuchteundurchlässigen Isolierung (11) versehen ist bzw. versehen wird,
- wobei im Bereich der Durchführung des oder der Teile (5) durch die Wärmedämmung (10) ein schalenförmiges, feuchteundurchlässiges, zur feuchteundurchlässigen Isolierung (11) hin offenes Element (1, 13) verwendet wird, wobei das Element (1, 13) in seiner Bodenfläche (2) mindestens eine Öffnung für das bzw. die durch die Wärmedämmung (10) hindurchzuführenden Teile (5) aufweist,
**dadurch gekennzeichnet,**
- **dass** das Element (1, 13) auf die feste Unterlage (7) aufgesetzt wird, entlang aller Innen- und Außenflächen der Seitenwände (3, 14) des Elements (1, 13) so an die Wärmedämmung angeschlossen wird, dass keine Kältebrücken in der Wärmedämmung (10) entstehen, d. h. dass Zwischenräume zwischen der in dem schalenförmigen Element (1, 13) befindlichen Wärmedämmung (10) und der von außen angrenzenden Wärmedämmung (10) vermieden werden und
- **dass** abschließend eine dichtende Verbindung zu der feuchteundurchlässigen Isolierung (11) hergestellt wird.

2. Verfahren nach Anspruch 1,
**dadurch gekennzeichnet,**
**dass** das schalenförmige Element (1, 13) vor der Montage des bzw. der Teile (5) auf die feste Unterlage aufgebracht wird.

3. Verfahren nach Anspruch 1,
**dadurch gekennzeichnet,**
**dass** das schalenförmige Element (1, 13) zusammen mit dem bzw. den Teilen (5) auf die feste Unterlage aufgebracht wird.

4. Verfahren nach Anspruch 1 bis 3,
**dadurch gekennzeichnet,**
**dass** der in dem schalenförmigen Element (1, 13) verbleibende Raum nach der Montage des bzw. der Teile (5) mit Wärmedämmmaterial (10) ausgefüllt wird.

5. Verfahren nach Anspruch 1,
**dadurch gekennzeichnet,**
**dass** bei bereits auf der festen Unterlage (7) montierten oder durch diese hindurchragenden Teilen (5) das schalenförmige Element (1, 13) mehrteilig ausgeführt ist und die Teile des schalenförmigen Elements (1, 13) von unterschiedlichen Seiten her an das bzw. die Teile (5) herangeführt und dichtend miteinander verbunden werden.

6. Verfahren nach Anspruch 1 und 3,
**dadurch gekennzeichnet,**
**dass** die feuchteundurchlässige Isolierung (11) zwischen dem schalenförmigen Element (1, 13) und den an dieses angrenzenden Bereichen hergestellt wird.

7. Verfahren nach Anspruch 1 bis 5,
**dadurch gekennzeichnet,**
**dass** die feuchteundurchlässige Isolierung (11) zwischen dem bzw. den Teilen (5) und den an dieses bzw. diese angrenzenden Bereiche hergestellt wird.

8. Vorrichtung zur Abdichtung von durch Wärmedämmungen hindurchragenden Teilen (5), die auf einer festen Unterlage (7) montiert sind bzw. werden oder durch diese ebenfalls hindurchragen,
- wobei die Vorrichtung eine Wärmedämmung (10) aufweist, die in Verwendung auf der festen Unterlage (7) aufliegt,
- wobei die Vorrichtung ferner an der freien Oberfläche der Wärmedämmung (10) eine feuchteundurchlässige Isolierung (11) aufweist und
- wobei die Vorrichtung außerdem ein Schalenförmiges, feuchteundurchlässiges, zur feuchteundurchlässigen Isolierung (11) hin offenes Element (1, 13) aufweist, das in Verwendung im Bereich der Durchführung des bzw. der Teile (5) durch die Wärmedämmung (10) auf der festen Unterlage (7) aufliegt, wobei das Element (1, 13) in seiner Bodenfläche (2) mindestens eine Öffnung für das bzw. die durch die Wärmedämmung (10) hindurchzuführenden Teile (5) aufweist,
**dadurch gekennzeichnet,**
**dass** die Höhe des feuchtundurchlässiges Elements (1, 13) im wesentlichen der Höhe der Wärmedämmung (10) entspricht.

9. Vorrichtung nach Anspruch 8,
**dadurch gekennzeichnet,**
**dass** das schalenförmige Element (1) sowohl in seiner Bodenfläche (2) als auch im Querschnitt rechteckig ausgebildet ist.

10. Vorrichtung nach Anspruch 8,
**dadurch gekennzeichnet,**
**dass** das schalenförmige Element (13) in seiner Bodenfläche (2) rechteckig und im Querschnitt konisch ausgebildet ist.

11. Vorrichtung nach Anspruch 8,
**dadurch gekennzeichnet,**
**dass** das schalenförmige Element (1) in seiner Bodenfläche (2) kreisförmig ausgebildet ist.

12. Vorrichtung nach einem der Ansprüche 8 bis 11,
**dadurch gekennzeichnet,**
**dass** die Seitenwände (3, 14) des schalenförmigen Elementes (1, 13) einen nach außen ragenden Rand (6, 15) aufweisen.

13. Vorrichtung nach einem der Ansprüche 8 bis 12,
**dadurch gekennzeichnet,**
**dass** das schalenförmige Element (1, 13) an seinem Außenmantel mit einer Wärmedämmschicht (16) versehen ist, die allseitig ebene Außenfläche aufweist.

14. Vorrichtung nach einem der Ansprüche 8 bis 13,
**dadurch gekennzeichnet,**
**dass** der Innenraum des schalenförmigen Elements (1, 13) bereits mit Wärmedämmmaterial (10) ausgefüllt ist.

15. Vorrichtung nach einem der Ansprüche 8 bis 14,
**dadurch gekennzeichnet,**
**dass** das schalenförmige Element (1, 13) mehrteilig ausgeführt ist.

16. Vorrichtung nach einem der Ansprüche 8 bis 15,
**dadurch gekennzeichnet,**
**dass** das schalenförmige Element (1, 13) und das bzw. die durch die Wärmedämmung (10) hindurchragenden Teile (5) als ein Stück ausgebildet sind.

17. Vorrichtung nach Anspruch 16,
**dadurch gekennzeichnet,**
**dass** das schalenförmige Element (1, 13) mit Wärmedämmmaterial (10) und mit der feuchteundurchlässigen Isolierung (11) versehen ist.

## Claims

1. A method for the sealing of parts (5) protruding through heat insulations which are fastened or will be mounted to a fixed support (7) or likewise protrude through such support (7),
- wherein the heat insulation (10) rests on or against such a support (7) and on its free surface is provided or will be provided with at least a moisture-impermeable insulation (11),
- wherein in the region of the passage of the part or parts (5) through the heat insulation (10) a shell-shaped moisture-impermeable element (1, 13), which is open in the direction of the moisture-impermeable insulation (11), is used,
wherein the element (1, 13) in its floor (2) has at least one aperture for the part or parts (5) to be passed through the heat insulation (10),
**characterized in**
- **that** the element (1, 13) is placed on the fixed support (7), along all inner and outer surfaces of the side walls (3, 14) of the element (1, 13) is so connected to the heat insulation that no cold bridges are created in the heat insulation (10), i.e. that gaps between the heat insulation (10) located in the shell-shaped element (1, 13) and the heat insulation (10) adjoining from the outside are avoided and
- **that** a sealing connection to the moisture-impermeably insulation (11) is finally established.

2. The method according to claim 1,
**characterized in**
**that** the shell-shaped element (1, 13) is placed on the fixed support prior to the installation of the part or parts (5).

3. The method according to claim 1,
**characterized in**
**that** the shell-shaped element (1, 13) together with the part or parts (5) is placed on the fixed support.

4. The method according to claim 1 to 3,
**characterized in**
**that** the space remaining in the shell-shaped element (1, 13) after the installation of the part or parts (5) is filled with heat insulation material (10).

5. The method according to claim 1,
**characterized in**
**that** with parts (5) already mounted on the fixed support (7) or protruding through said support the shell-shaped element (1, 13) is embodied in multiple parts and the parts of the shell-shaped element (1, 13) are brought to the part or parts (5) from different sides and are connected with one another in a sealing manner.

6. The method according to claim 1 and 3,
**characterized in**
**that** the moisture-impermeable insulation (11) is established between the shell-shaped element (1, 13) and the regions adjoining said element.

7. The method according to claim 1 to 5,
**characterized in**
**that** the moisture-impermeable insulation (11) is established between the part or parts (5) and the regions adjoining said part or parts.

8. A device for the sealing of parts (5) which are or will be mounted on a fixed support (7) or likewise protrude through said support,
wherein the device has a heat insulation (10) which in use rests on the fixed support (7),
wherein the device further has a moisture-impermeable insulation (11) on the free surface of the heat insulation (10) and
wherein the device additionally has a shell-shaped moisture-impermeable element (1, 13) which is open in the direction of the moisture-impermeable insulation (11), which in use in the region of the passage of the part or parts (5) through the heat insulation (10) rests on the fixed support (7), wherein the element (1, 13) in its floor (2) has at least one aperture for the part or parts (5) to be passed through the heat insulation (10), **characterized in that** the height of the moisture-impermeable element (1, 13) substantially corresponds to the height of the heat insulation (10).

9. The device according to claim 8,
**characterized in**
**that** the shell-shaped element (1) both in its floor (2) as well as in cross section is of a rectangular design.

10. The device according to claim 8,
**characterized in**
**that** the shell-shaped element (13) in its floor (2) is rectangular and in cross section taper in design.

11. The device according to claim 8,
**characterized in**
**that** the shell-shaped element (1) in its floor (2) is of a circular design.

12. The device according to any one of the claims 8 to 11,
**characterized in**
**that** the side walls (3, 14) of the shell-shaped element (1, 13) have an edge (6, 15) which protrudes in the direction of the outside.

13. The device according to any one of the claims 8 to 12,
**characterized in**
**that** the shell-shaped element (1, 13) on its outer jacket is provided with a heat insulation layer (16) which has a flat outer surface on all sides.

14. The device according to any one of the claims 8 to 13,
**characterized in**
**that** the inner space of the shell-shaped element (1, 13) is already filled out with heat insulation material (10).

15. The device according to any one of the claims 8 to 14,
**characterized in**
**that** the shell-shaped element (1, 13) is embodied of multiple parts.

16. The device according to any one of the claims 8 to 15,
**characterized in**
**that** the shell-shaped element (1, 13) and the part or parts (5) protruding through the heat insulation (10) are designed as one piece.

17. The device according to claim 16,
**characterized in**
**that** the shell-shaped element (1, 13) is provided with heat insulation material (10) and with the moisture-impermeable insulation (11).

## Revendications

1. Procédé pour rendre étanche des pièces (5) traversant un système d'isolation thermique qui sont fixées ou montées sur une base fixe (7) ou traversent également cette base (7),
- dans lequel le système d'isolation thermique (10) de la base (7) repose sur ou au niveau de celle-ci et il est pourvu ou on le pourvoit sur sa surface libre d'au moins d'un isolant thermique imperméable à l'humidité (11),
- dans lequel, au niveau du passage de la ou des pièces (5) à travers le système d'isolation thermique (10), on emploie un élément en forme de coque imperméable à l'humidité (1, 13) ouvert sur l'isolant imperméable à l'humidité (11), l'élément (1, 13) présentant dans sa surface de fond (2) au moins une ouverture pour la ou les pièces (5) traversant le système d'isolation thermique (10),
**caractérisé en ce que**
- l'élément (1, 13) posé sur la base fixe (7) est raccordé le long de toutes les surfaces intérieures et extérieures des parois latérales (3, 14) de l'élément (1, 13) de manière à ce qu'il ne se forme pas de ponts thermiques dans le système d'isolation thermique (10), c'est-à-dire que des intervalles entre le système d'isolation thermique (10) se trouvant dans l'élément en forme de coque (1, 13) et le système d'isolation thermique adjacent de l'extérieur (10) soient évités et que
- il est ensuite établi une liaison étanche avec l'isolant imperméable à l'humidité (11).

2. Procédé selon la revendication 1,
**caractérisé en ce que**
l'élément en forme de coque (1, 13) est appliqué avant le montage de la ou des pièces (5) sur la base fixe.

3. Procédé selon la revendication 1,
**caractérisé en ce que**
l'élément en forme de coque (1, 13) est appliqué avec la ou les pièces (5) sur la base fixe.

4. Procédé selon les revendications 1 à 3,
**caractérisé en ce que**
l'espace restant dans l'élément en forme de coque (1, 13) après le montage de la ou des pièces (5) est comblé avec du matériau isolant thermique (10).

5. Procédé selon la revendication 1,
**caractérisé en ce que**,
dans le cas de pièces (5) déjà montées sur la base fixe (7) ou traversant celle-ci, l'élément en forme de coque (1, 13) est réalisé en plusieurs pièces et que les pièces de l'élément en forme de coque (1, 13) sont approchées depuis différents côtés de la ou des pièces (5) et reliées entre elles de manière étanche.

6. Procédé selon les revendications 1 et 3,
**caractérisé en ce que**
l'isolant imperméable à l'humidité (11) est réalisé entre l'élément en forme de coque (1, 13) et les zones adjacentes à celui-ci.

7. Procédé selon les revendications 1 à 5,
**caractérisé en ce que**
l'isolant imperméable à l'humidité (11) est réalisé entre la ou les pièces (5) et les zones adjacentes à celle-ci ou celles-ci.

8. Dispositif pour rendre étanche des pièces (5) traversant un système d'isolation thermique qui sont fixées ou montées sur une base fixe (7) ou traversent également celle-ci,
- dans lequel ce dispositif comporte un système d'isolation thermique (10) qui, en cours d'usage, repose sur la base fixe (7),
- dans lequel le dispositif comporte en outre, sur la surface libre du système d'isolation thermique (10), un isolant imperméable à l'humidité (11) et
- dans lequel le dispositif comporte en outre un élément en forme de coque imperméable à l'humidité (1, 13) ouvert sur l'isolant imperméable à l'humidité (11) et qui repose, en cours d'usage, au niveau du passage de la ou des pièces (5) à travers le système d'isolation thermique (10), sur la base fixe (7), l'élément (1, 13) comportant dans sa surface de fond (2) au moins une ouverture pour la ou les pièces (5) traversant le système d'isolation thermique (10),
**caractérisé en ce que**
la hauteur de l'élément en forme de coque imperméable à l'humidité (1, 13) équivaut sensiblement à la hauteur du système d'isolation thermique (10).

9. Dispositif selon la revendication 8,
**caractérisé en ce que**
l'élément en forme de coque (1) a une conformation rectangulaire aussi bien au niveau de sa surface de fond (2) que de sa section transversale.

10. Dispositif selon la revendication 8,
**caractérisé en ce que**
l'élément en forme de coque (1) a une conformation rectangulaire au niveau de sa surface de fond (2) et conique au niveau de sa section transversale.

11. Dispositif selon la revendication 8,
**caractérisé en ce que**
l'élément en forme de coque (1) a une conformation circulaire au niveau de sa surface de fond (2).

12. Dispositif selon une des revendications 8 à 11,
**caractérisé en ce que**
les parois latérales (3, 14) de l'élément en forme de coque (1, 13) comportent un bord dépassant vers l'extérieur (6, 15).

13. Dispositif selon une des revendications 8 à 12,
**caractérisé en ce que**
l'élément en forme de coque (1, 13) est pourvu sur son enveloppe extérieure d'une couche d'isolant thermique (16) qui présente de tous côtés une surface extérieure plane.

14. Dispositif selon une des revendications 8 à 13,
**caractérisé en ce que**
l'espace intérieur de l'élément en forme de coque (1, 13) est déjà comblé par du matériau isolant thermique (10).

15. Dispositif selon une des revendications 8 à 14,
**caractérisé en ce que**
l'élément en forme de coque (1, 13) est réalisé en plusieurs pièces.

16. Dispositif selon une des revendications 8 à 15,
**caractérisé en ce que**
l'élément en forme de coque (1, 13) et la ou les pièces (5) traversant le système d'isolation thermique (10) sont réalisés en une pièce.

17. Dispositif selon la revendication 16,
**caractérisé en ce que**
l'élément en forme de coque (1, 13) est pourvu de matériau isolant thermique (10) et de l'isolant imperméable à l'humidité (11).
